Europäisches Patentamt

(19) European Patent Office

Office européen des brevets

(11) Publication number: **0 264 735**
**B1**

(12) EUROPEAN PATENT SPECIFICATION

(45) Date of publication of the patent specification:
26.09.90

(21) Application number: **87114749.2**

(22) Date of filing: **09.10.87**

(51) Int. Cl.⁵: **B04C 5/14,** B04C 5/20,
B01D 45/12, F27B 15/12

(54) Cyclone for separation of a particulate material from a gas.

(30) Priority: **13.10.86 SE 8604326**

(43) Date of publication of application:
**27.04.88 Bulletin 88/17**

(45) Publication of the grant of the patent:
**26.09.90 Bulletin 90/39**

(84) Designated Contracting States:
**DE ES GB**

(56) References cited:
**DE-A- 2 435 416**
**FR-A- 2 307 584**
**US-A- 3 235 090**

**DERWENTS ABSTRACT No. 83-745949/34, SU 967582**

(73) Proprietor: **ASEA Stal Aktiebolag,**
**S-612 20 Finspang(SE)**

(72) Inventor: **Brännström, Rolne, Pirvägen 38,**
**S-612 00 Finspong(SE)**
Inventor: **Veenhuizen, Dirk, Fäskogsvägen 53,**
**S-612 00(SE)**

(74) Representative: **Boecker, Joachim, Dr.-Ing.,**
**Rathenauplatz 2-8, D-6000 Frankfurt a.M. 1(DE)**

## Description

The invention relates to a cyclone for separation of a particulate material from a gas, for example ashes and/or consumed bed material, which for example in a power plant leave/leaves a bed vessel (2) together with combustion gases. The invention relates primarily to the cleaning of combustion gases in a PFBC power plant. The term "PFBC" is formed of the initial letters in the expression Pressurized Fluidized Bed Combustion.

During separation of material in a cyclone, a circulating vortex is formed and solid particles are accumulated on the wall of the cyclone. In the lower conical part of the cyclone, the particle concentration and the particle velocity relative to the cyclone wall increase with decreasing diameter of said conical part and the erosive impact on the cyclone wall increases. Thus, from the view point of wear, the cyclone outlet constitutes a critical portion. One way of solving this wear problem has been the insertion of devices (vortex eliminator) which reduce the speed of rotation of the vortex. Another way has been to construct the outlet part of or to line it with hardened wear resistant materials, for example Ni-hard, ceramics, basalt, or the like.

It is the object of the invention to develop a cyclone of the above-mentioned kind with a greatly reduced liability to erosive wear in its outlet part without being forced to take refuge to decreased vortex speed or expensive materials.

To achieve this object the invention suggests a cyclone with the features exhibited in claim 1.

Further developments of the invention are characterized by the features of the additional claims.

The invention brings about a considerable reduction of erosion in the outlet part of the cyclone by means of a relatively inexpensive and robust design. Thus the invention increases the life time of the cyclone, and the operational-availability of the power plant, and reduces the maintainance and operating costs of the plant.

The dimension of the bottom diameter of the cyclone should be at least three times that of the outer diameter of the outlet tube. The outlet tube should project into the cyclone by a distance which is at least twice the outer diameter of the tube. The annular space is suitably given such a depth that a layer or cushion of dust can form at the bottom. The lowermost part of the cyclone is suitably cylindrical. It may be provided with vortex-damping means.

Although the invention is primarily designed for PFBC power plants, it is also applicable to other plants in which erosive particulate material is to be separated from gases, for example in carbon gasification plants.

The invention will now be described in greater detail with reference to the accompanying drawings showing – by way of example – in

Figure 1 a conventional PFBC power plant to which the invention may be applied,

Figure 2 a first embodiment of a cyclone according to the invention,

Figures 3 and 4 alternative embodiments of a cyclone according to the invention.

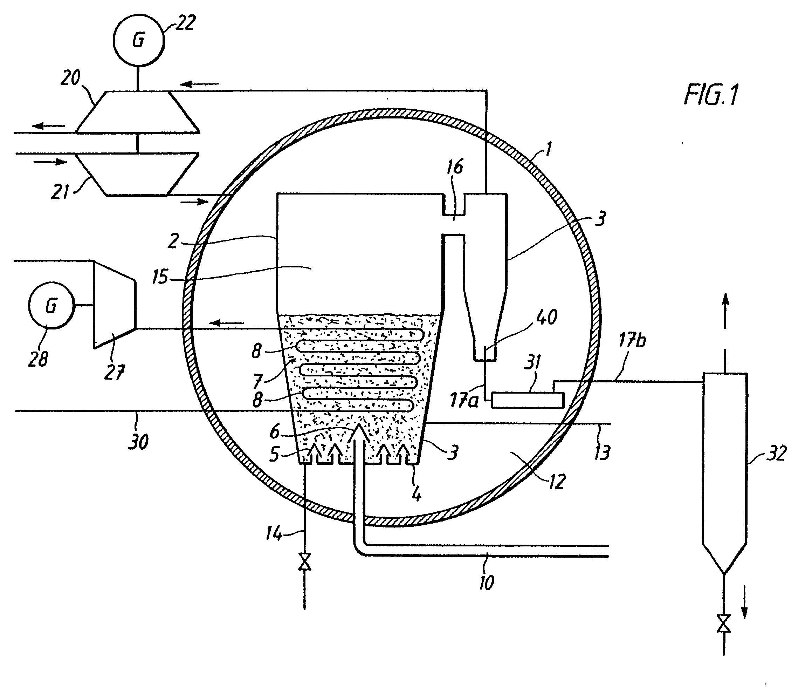

In Figure 1 a pressure vessel 1 surrounds a bed vessel 2 and a gas cleaning plant, symbolized by only one cyclone 3. In reality such a cleaning part usually consists of a plurality of cyclones connected in series and/or in parallel. The bed vessel 2 is provided with a bottom 4 with air nozzles 5 and fuel nozzles 6. The bed vessel 2 contains a bed 7 of a particulate bed material containing or completely consisting of a sulphur absorbent such as lime or dolomite. In the lower part of the bed vessel or combustion chamber 2 there are water-supplied tubes 8 for generating steam and thereby cooling the bed 7. Fuel is supplied to the bed 7 via the conduit 10 and nozzles 6. Air for combustion of this fuel and for fluidization of the bed material is supplied to the combustion chamber 2 from the space 12 between the pressure vessel 1 and the combustion chamber 2 via the nozzles 5 in the bottom 4. Bed material is supplied to the bed 7 through a conduit 13 and is removed through a conduit 14.

The combustion gases are accumulated in the freeboard 15 above the bed 7 and are passed via the conduit 16 to the cyclone 3, where dust is separated and discharged via the conduit 17. Through the conduit 18 the gases are passed to a turbine 20 driving a compressor 21 and a generator 22. The compressor supplies compressed air to the space 12. The gases leaving the turbine 20 are passed through a feed water preheater and from there to a chimney.

Steam generated in the tubes 8 is led to the steam turbine 27 which drives a generator 28. The expanded steam is led to a condenser and from there to a feed water tank. By means of a feed water pump, the condensate is returned to the tubes 8 of the bed vessel 2 via a conduit 30.

The ash conveying pipe 17a, 17b comprises a pressure reducing device 31, which is dimensioned such as to obtain a gas flow necessary for removal of separated material at the pressure difference prevailing between the gas cleaner and a receiving container 32, in which the pressure is approximately equal to atmospheric pressure. The pressure reducing device 31 for removal of separated material from the cyclone 3 is designed as a cooler for dust and the gas conveying the dust. It may be of the kind disclosed in EP-B-0108505 or in EP-A-86100806.

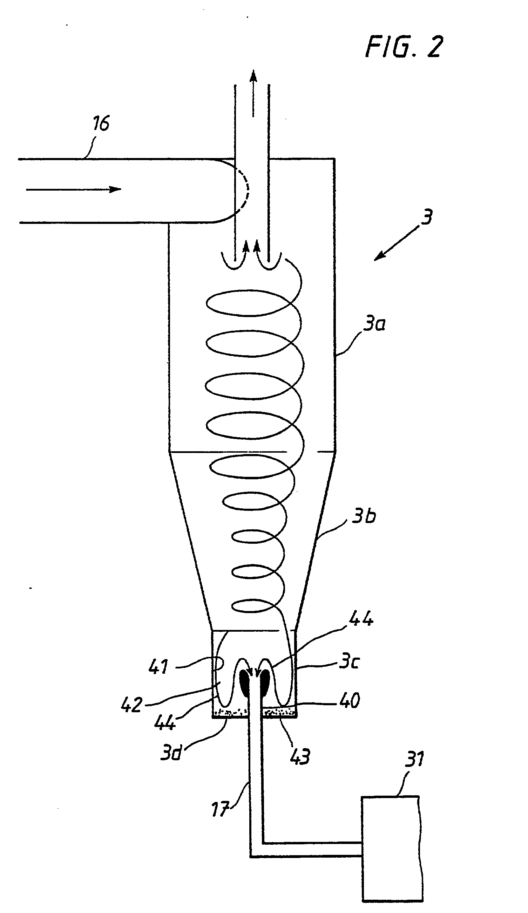

As shown in Figure 2, the cyclone 3 may be formed with an upper cylindrical part 3a, an intermediate part 3b, and a lower cylindrical part 3c with a plane bottom 3d. An outlet tube 40 is connected to the bottom 3d and projects somewhat into the lower cylindrical part 3c. The tube 40, the wall 41 in the lower cylindrical part of the cyclone 3, and the bottom 3d form an annular space 42 open at its top. This space 42 is suitably given such a depth that, in operation, a cushion 43 of separated material is formed at the bottom 3d, which cushion prevents erosion of the bottom plate. The tube 40 is connected to or integral with the tube 17 which conducts separated particulate material to the pressure reducing device 31. The cyclone part 3c is given such a diameter that the vortex of gas and particles has such a low velocity as to cause only insignificant erosion on the wall surface 41 in the part 3c. The twice enforced diversion of the gas stream in the space 42 before entering into the tube 40, as shown by the arrows 44, also produces a retarding effect which reduces the vortex velocity. The diversion and the retardation reduce the wear of the bottom 3d, or eliminate it completely by the formation of the dust cushion 43. The cushion 43 also contributes to a more efficient retardation.

Hardly any erosion at all occurs in the outlet tube 40. By diverting the gas-particle stream by 180° before entering into the outlet tube, a concentration of the particles to the centre of the outlet tube is obtained, which results in a virtually complete elimination of tube wear. This effect is known per se from the above-mentioned EP-A-86100806.

The tube 40 and the outflow therethrough are dimensioned so as to obtain also a sufficient exhaustion of particles from the central part of the cyclone 3.

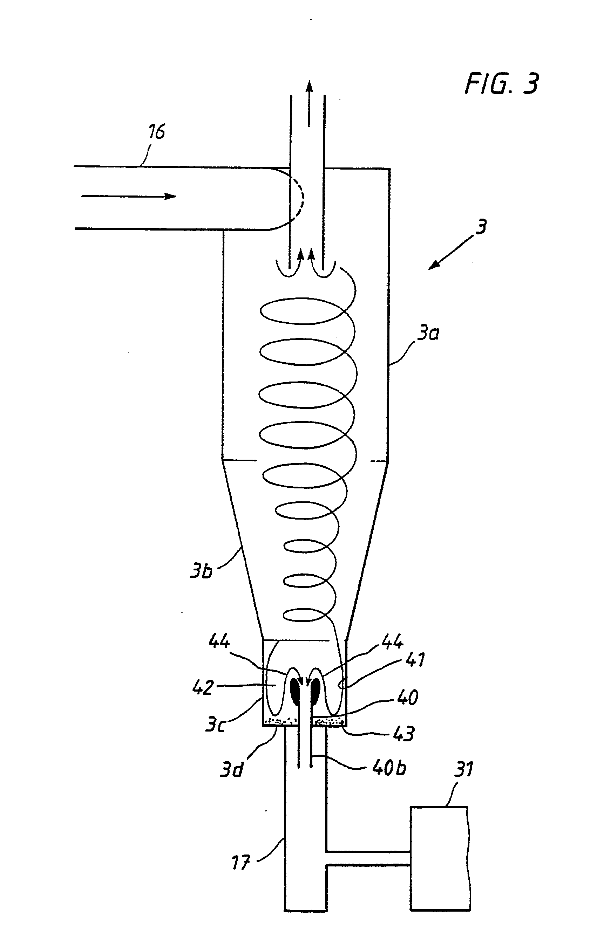

With the embodiment according to Figure 3, a great pressure reduction is obtained at the actual outlet from the cyclone 3. The pipe 17 connected to the cyclone 3 has a considerably larger diameter than the outlet tube 40. The lower end of the tube 40 may be connected to the bottom 3d, or, as shown in Figure 3, may be extended by a part 40b projecting down into the pipe 17.

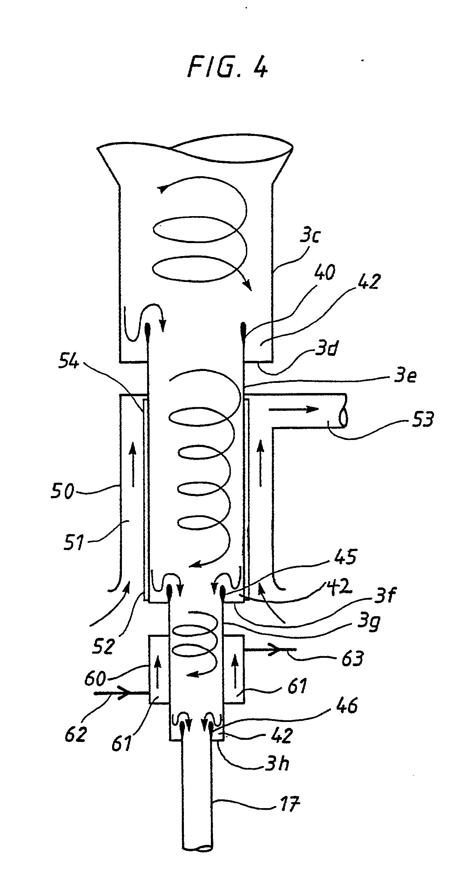

In the embodiment according to Figure 4, the lower part of the cyclone 3 is formed with several cylindrical or conical parts, arranged in series, with successively decreasing diameter towards the outlet, namely, part 3c with a bottom 3d, part 3e with a bottom 3f, and part 3g with a bottom 3h. The outlet tube 40 projects into the cyclone part 3c, an outlet tube 45 projects into the cyclone part 3e, and an outlet tube 46 projects into the cyclone part 3g. The latter outlet tube 46 is connected to the conveying pipe 17.

The cyclone 3 can be cooled by the surrounding compressed air in the space 12 between the bed vessel 2 and the pressure vessel 1, or by water. To improve the cooling effect, as shown in Figure 4, the lower parts 3c, 3e, 3g of the cyclone 3 may be surrounded by cooling jackets 50 in the case of air cooling, or cooling jackets 60 in the case of water cooling.

In the case of a PFBC plant with cyclones 3 placed in a pressure vessel 1 filled with compressed air, the surrounding air in the space 12 has a high density and hence also a high cooling capacity. By a cooling jacket 50, which in Figure 4 surrounds the part 3e of the cyclone 3, the cooling effect is improved by air from the space 12 being forced to pass along the part 3e through gap 51, formed by the jacket 50, on its way to the bottom nozzles 5 of the bed vessel 2. The cooling effect can be improved by providing the part 3e with longitudinal or helical flanges 52.

In a power plant with a fluidized bed 7, which operates at a pressure insignificantly exceeding the atmospheric pressure and in which the cyclone 3 is not surrounded by compressed air with high density and good cooling capacity, cooling by water may be an alternative solution. By a cooling jacket 60, which in Figure 4 surrounds the part 3g, the lower part of the cyclone 3 can be cooled. Cooling water is supplied to the space 61 between the cooling jacket 60 and the part 3g via the conduit 62 and is transported away via the conduit 63. Also cyclones in PFBC power plants may, of course, be water-cooled.

The invention has been shown as applied to a PFBC power plant. However, the cyclone may be used in all types of plants involving cleaning of dust-laden gas. In plants with a low or insignificant pressure difference between the cyclone and a receiving container for separated dust, it may be necessary to place a suction fan in the outlet conduit from the cyclone.

The abrasion resistance and the life time of a cyclone will, of course, be extra high if abrasion-resistant materials are used also in connection with the embodiments according to the invention.

## Claims

1. A cyclone (3) for separation of a particulate material from a gas, for example ashes and/or consumed bed material, which, for example in a power plant with pressurized fluidized bed combustion, a so-called PFBC-power plant, leave/leaves a bed vessel (2) together with combustion gases, said cyclone having a substantially vertical axis and comprising an upper cylindrical part, a lower conical part, a tangential inlet for the particulate loaded gas and a central outlet for gas at the upper end of the cyclone and a bottom (3d) at its lower end with an outlet for separated particulate material and transport gas for said particulate material in a connected transport conduit, wherein said outlet comprises a tubular member (40) projecting up into the cyclone and forming an open topped annular space with the surrounding wall of the cyclone.

2. Cyclone according to Claim 1, wherein said annular space has a substantially horizontal bottom.

3. Cyclone according to Claim 2, wherein the bottom of the cyclone has a diameter which is at least three times the outer diameter of the outlet tube.

4. Cyclone according to Claim 2, wherein the depth of the annular space (42) is at least twice the outer diameter of the outlet tube (40).

5. Cyclone according to Claim 2, wherein the outlet tube (40) opens out into a space with a larger diameter than that of the outlet tube (40).

6. Cyclone according to Claim 1, wherein said lower conical part of the cyclone has a cylindrical appendix with a substantially horizontal bottom and wherein said outlet comprises a tubular member projecting up into said appendix and forming an open topped annular space with the surrounding wall of said appendix.

7. Cyclone according to Claim 6, wherein the cyclone is provided with two or more appendixes in series with a gradually decreasing cross section.

8. Cyclone according to any of Claims 1–7, wherein the lower part of the cyclone is surrounded by a cooling jacket which controls a gas stream along said lower part.

9. Cyclone according to any of Claims 1–7, wherein the lower part of the cyclone is surrounded by a cooling jacket for cooling by water.


## Patentansprüche

1. Zyklon (3) zur Abscheidung von partikelförmigem Matrial aus einem Gas, zum Beispiel Asche und/oder verbrauchtes Bettmaterial, welche/welches, zum Beispiel in einem Kraftwerk mit einer unter Druck erfolgenden Verbrennung in einem Wirbelbett, also in einer sogenannten PFBC-Kraftwerksanlage, ein Bettgefäß (2) zusammen mit Verbrennungsgasen verläßt, wobei der Zyklon eine im wesentlichen vertikale Achse, einen oberen zylindrischen Teil, einen unteren konischen Teil, eine tangentiale Eintrittsöffnung für das mit Partikeln beladene Gas, an seinem oberen Ende eine zentrale Austrittsöffnung für gereinigtes Gas und an seinem unteren Ende einen Boden (3d) mit einer Austrittsöffnung für abgeschiedenes partikelförmiges Material und Transportgas für dieses partikelförmige Material in einer angeschlossenen Transportleitung hat, und wobei zu der genannten Austrittsöffnung ein rohrförmiges Glied (40) gehört, welches nach oben in den Zyklon hineinragt und mit der umgebenden Wand des Zyklons einen nach oben offenen ringförmigen Raum bildet.

2. Zyklon nach Anspruch 1, wobei der genannte ringförmige Raum einen im wesentlichen horizontalen Boden hat.

3. Zyklon nach Anspruch 2, wobei der Boden des Zyklons einen Durchmesser hat, der zumindest dreimal so groß ist wie der Außendurchmesser des Austrittrohres.

4. Zyklon nach Anspruch 2, wobei die Tiefe des ringförmigen Raumes (42) mindestens das Doppelte des äußeren Durchmessers des Austrittrohres (40) beträgt.

5. Zyklon nach Anspruch 2, wobei das Austrittrohr (40) in einen Raum mündet, dessen Durchmesser größer ist als der des Austrittrohres (40).

6. Zyklon nach Anspruch 1, wobei der genannte untere konische Teil des Zyklons eine zylindrische Verlängerung mit einem im wesentlichen horizontalen Boden hat und wobei zu der Austrittsöffnung ein rohrförmiges Glied gehört, welches in die genannte Verlängerung nach oben zeigend hineinragt und einen oben offenen ringförmigen Raum mit den umgebenden Wänden der genannten Verlängerung bildet.

7. Zyklon nach Anspruch 6, wobei der Zyklon mit zwei oder mehr in Reihe angeordneten Verlängerungen versehen ist, die stufenweise einen kleineren Querschnitt haben.

8. Zyklon nach einem der Ansprüche 1–7, wobei der untere Teil des Zyklons mit einem Kühlfutter umgeben ist, welches einen Gasstrom längs des genannten unteren Teils steuert.

9. Zyklon nach einem der Ansprüche 1–7, wobei der untere Teil des Zyklons mit einem Kühlfutter zur Kühlung durch Wasser umgeben ist.


## Revendications

1. Cyclone (3) pour séparer d'un gaz de la matière en particules, par exemple des cendres et/ou du matériau de lit consommé qui, par exemple dans une centrale de production d'électricité à combustion à lit fluidisé sous pression, dénommée centrale PFBC, quittent ou quitte un récipient de lit (2) en même temps que des gaz de combustion, ce cyclone ayant un axe sensiblement vertical et comprenant une partie cylindrique supérieure, une partie conique inférieure, une entrée tangentielle pour le gaz chargé de particules et une sortie centrale pour le gaz épuré, à l'extrémité supérieure du cyclone, et un fond (3d) à son extrémité inférieure, avec une sortie pour la matière en particules séparées et pour le gaz de transport de cette matière en particules dans un conduit de transport relié, la sortie comprenant un élément tubulaire (40) faisant saillie dans le cyclone et formant un espace annulaire, ouvert à son sommet, avec la paroi du cyclone qui l'entoure.

2. Cyclone suivant la revendication 1, dans lequel l'espace annulaire a un fond sensiblement horizontal.

3. Cyclone suivant la revendication 2, dans lequel le fond du cyclone a un diamètre qui représente au moins trois fois le diamètre extérieur du tube de sortie.

4. Cyclone suivant la revendication 2, dans lequel la profondeur de l'espace annulaire (42) représente au moins deux fois le diamètre extérieur du tube de sortie (40).

5. Cyclone suivant la revendication 2, dans lequel le tube de sortie (40) débouche dans un espace ayant un diamètre plus grand que celui du tube de sortie (40).

6. Cyclone suivant la revendication 1, dans lequel la partie conique inférieure du cyclone a un prolongement cylindrique ayant un fond sensiblement horizontal et la sortie comprend un élément tubulaire faisant saillie dans le prolongement et formant un espace annulaire ouvert au sommet avec la paroi du prolongement qui l'entoure.

7. Cyclone suivant la revendication 6, dans lequel le cyclone est muni de deux ou de plusieurs prolongements en série, de section transversale diminuant progressivement.

8. Cyclone suivant l'une des revendications 1 à 7, dans lequel la partie inférieure du cyclone est entourée d'une chemise de refroidissement, qui règle le passage d'un gaz sous forme de vapeur, le long de la partie inférieure.

9. Cyclone suivant l'une quelconque des revendications 1 à 7, dans lequel la partie inférieure du cyclone est entourée d'une chemise de refroidissement pour le refroidissement par de l'eau.

*FIG.1*

EP 0 264 735 B1

FIG. 2

FIG. 3

## FIG. 4